(19) Europäisches Patentamt
European Patent Office
Office européen des brevets

(11) EP 4 488 307 A1

(12) EUROPEAN PATENT APPLICATION
published in accordance with Art. 153(4) EPC

(43) Date of publication:
**08.01.2025 Bulletin 2025/02**

(21) Application number: **23760173.7**

(22) Date of filing: **27.02.2023**

(51) International Patent Classification (IPC):
***C08G 18/32*** (2006.01) ***C08G 18/10*** (2006.01)
***C08G 18/16*** (2006.01) ***C08G 18/48*** (2006.01)
***C08G 18/66*** (2006.01) ***C08G 18/76*** (2006.01)
***F16L 1/12*** (2006.01) ***F16L 11/133*** (2006.01)

(52) Cooperative Patent Classification (CPC):
**C08G 18/10; C08G 18/16; C08G 18/32; C08G 18/48; C08G 18/66; C08G 18/76; F16L 1/12; F16L 11/133**

(86) International application number:
**PCT/JP2023/007079**

(87) International publication number:
**WO 2023/163175 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029388**

(71) Applicant: **The Yokohama Rubber Co., Ltd.**
**Hiratsuka-shi, Kanagawa 254-8601 (JP)**

(72) Inventors:
- **TANAKA Yoshimi**
**Hiratsuka-shi, Kanagawa 254-8601 (JP)**
- **WAKAMATSU Hiroyuki**
**Hiratsuka-shi, Kanagawa 254-8601 (JP)**

(74) Representative: **Grünecker Patent- und Rechtsanwälte**
**PartG mbB**
**Leopoldstraße 4**
**80802 München (DE)**

# (54) POLYURETHANE COMPOSITION AND MARINE HOSE

(57) An object of the present invention is to provide: a polyurethane composition that is excellent in working life, curability under room temperature conditions and in an open system, blister resistance, hardness after curing, abrasion resistance, and water resistance; and a marine hose. The present invention is a room-temperature curable polyurethane composition including a urethane prepolymer that is formed from a polyether polyol and tolylene diisocyanate and includes isocyanate groups, a curing agent that contains trimethylene-bis(4-aminobenzoate) and/or 2-methylpropyl 3,5-diamino-4-chlorobenzoate, and adipic acid that acts as a catalyst, in which a mole ratio of the isocyanate groups included in the urethane prepolymer to amino groups included in the curing agent is within a range from 0.90 to 2.00, and a content of trimethylene-bis(4-aminobenzoate) and/or 2-methylpropyl 3,5-diamino-4-chlorobenzoate is within a range from 95 to 100 mol% in a total amount of the curing agent; and the present invention is a marine hose formed by using the same.

EP 4 488 307 A1

## Description

Technical Field

The present invention relates to a polyurethane composition and a marine hose.

Background Art

In the related art, marine hoses have been used for the transportation of oil, such as crude oil, between oil tanks on land and oil tankers at sea, for example.

For example, polyurethane is used for the outermost layer covering a large rubber product such as a marine hose. As a curing agent used for obtaining polyurethane, 3,3'-dichloro-4,4'-diaminophenylmethane (MOCA) is used from the point of view of having an excellent balance between curability and physical properties.

In recent years, on the other hand, from the point of view of environmental health, there has been known a polyurethane molded article obtained by casting, heating, and curing a polyurethane resin composition without using MOCA (e.g., Patent Document 1).

Citation List

Patent Literature

Patent Document 1: JP 4861001 B

Summary of Invention

Technical Problem

Under such circumstances, the present inventors have prepared a polyurethane composition with reference to Patent Document 1, and evaluated this polyurethane composition after curing at room temperature in an open system (in condition of being capable of contact with moisture), and have found that it may be difficult to achieve performances (sufficient working life can be achieved, excellent in curability under room temperature conditions and in an open system, excellent in blister resistance, high hardness after curing, and excellent in abrasion resistance and water resistance) equivalent to or higher than those in the case of using MOCA.

Accordingly, an object of the present invention is to provide a polyurethane composition which is excellent in working life, curability under room temperature conditions and in an open system, blister resistance, hardness after curing, abrasion resistance, and water resistance.

Furthermore, another object of the present invention is to provide a marine hose.

Solution to Problem

As a result of intensive studies to solve the aforementioned problem, the present inventors have found that a desired effect can be achieved according to a polyurethane composition containing a urethane prepolymer that is formed from a polyether polyol and tolylene diisocyanate and includes isocyanate groups, a curing agent that contains trimethylene-bis(4-aminobenzoate) and/or 2-methylpropyl 3,5-diamino-4-chlorobenzoate, and adipic acid that acts as a catalyst, in which a mole ratio of the isocyanate groups included in the urethane prepolymer to amino groups included in the curing agent and a content of the trimethylene-bis(4-aminobenzoate) and/or the 2-methylpropyl 3,5-diamino-4-chlorobenzoate are each within a specific range, and this invention has been achieved.

An embodiment of the present invention is based on the findings described above, and specifically solves the problems described above by the following configurations.

[1] A polyurethane composition of a room-temperature curable type including:

a urethane prepolymer that is formed from a polyether polyol and tolylene diisocyanate and includes isocyanate groups;
a curing agent that contains trimethylene-bis(4-aminobenzoate) and/or 2-methylpropyl 3,5-diamino-4-chlorobenzoate; and
adipic acid that acts as a catalyst,
a mole ratio of the isocyanate groups included in the urethane prepolymer to amino groups included in the curing

agent being within a range from 0.90 to 2.00, and
a content of the trimethylene-bis(4-aminobenzoate) and/or the 2-methylpropyl 3,5-diamino-4-chlorobenzoate being within a range from 95 to 100 mol% in a total amount of the curing agent.

[2] The polyurethane composition according to [1], wherein an entire content of the curing agent is trimethylene-bis(4-aminobenzoate).
[3] The polyurethane composition according to [1], wherein an entire content of the curing agent is 2-methylpropyl 3,5-diamino-4-chlorobenzoate.
[4] The polyurethane composition according to any one of [1] to [3], wherein the mole ratio is within a range from 1.00 to 1.25.
[5] The polyurethane composition according to any one of [1] to [4], wherein the mole ratio is within a range from 1.02 to 1.08.
[6] The polyurethane composition according to any one of [1] to [5], wherein a content of the adipic acid is within a range from 0.03 to 0.20 parts by mass per 100 parts by mass of the urethane prepolymer.
[7] The polyurethane composition according to any one of [1] to [6], wherein a content of the adipic acid is within a range from 0.09 to 0.13 parts by mass per 100 parts by mass of the urethane prepolymer.
[8] The polyurethane composition according to any one of [1] to [7], wherein the polyurethane composition is for a marine hose.
[9] A marine hose formed by using the polyurethane composition according to any one of [1] to [7].
[10] The marine hose according to [9], including an outermost layer formed by using the polyurethane composition.

Advantageous Effects of Invention

The polyurethane composition of the present invention is excellent in working life, curability under room temperature conditions and in an open system, blister resistance, hardness after curing, abrasion resistance, and water resistance.
According to the polyurethane composition of the present invention, a marine hose of the present invention can be formed.

Description of Embodiments

Embodiments of the present invention will be described in detail below.
In the present specification, a numerical range represented by using "(from) ... to ..." includes the number before "to" as a lower limit value and the number after "to" as an upper limit value.
In the present specification, the production method of each component is not particularly limited unless otherwise noted. Examples of the method include a known method.
In the present specification, unless otherwise noted, a substance corresponding to each component can be used alone or two or more types of substances can be used in combination. In a case where a component includes two or more types of substances, a content of the component means the total content of the two or more types of substances.
In the present specification, the fact that at least one of working life, curability under room temperature conditions and in an open system, blister resistance, hardness after curing, abrasion resistance, and water resistance is more excellent may be referred to as "the effects of the present invention being more excellent".

Polyurethane composition

The polyurethane composition of the present invention (composition of the present invention) is a room-temperature curable polyurethane composition that contains:

a urethane prepolymer that is formed from a polyether polyol and tolylene diisocyanate and includes isocyanate groups;
a curing agent that contains trimethylene-bis(4-aminobenzoate) and/or 2-methylpropyl 3,5-diamino-4-chlorobenzoate; and
adipic acid that acts as a catalyst,
wherein a mole ratio of the isocyanate groups included in the urethane prepolymer to amino groups included in the curing agent is within a range from 0.90 to 2.00, and
a content of the trimethylene-bis(4-aminobenzoate) and/or the 2-methylpropyl 3,5-diamino-4-chlorobenzoate is within a range from 95 to 100 mol% in the total amount of the curing agent.
Each of the components included in the composition according to an embodiment of the present invention will be

described in detail below.

Urethane prepolymer

The urethane prepolymer contained in the compositions of the present invention is formed from a polyether polyol and tolylene diisocyanate.

Polyether polyol

The polyether polyol used for forming the aforementioned urethane prepolymer is a compound which includes a plurality of hydroxy groups per molecule and whose main chain is a polyether.
Examples of the polyether polyol include polyoxyethylene diol (polyethylene glycol), polyoxypropylene diol (polypropylene glycol: PPG), polyoxypropylene triol, ethylene oxide/propylene oxide copolymers, and polytetramethylene ether glycol (PTMEG).
The polyether polyol preferably contains polytetramethylene ether glycol from the point of view that the effects of the present invention are more excellent.
From the point of view that the viscosity of the urethane prepolymer obtained by the reaction with an isocyanate (isocyanate containing at least tolylene diisocyanate) can have moderate fluidity at normal temperature, the polyether polyol preferably has a weight average molecular weight within a range from 500 to 20,000. In the present invention, the weight average molecular weight is a value obtained by GPC analysis (solvent: tetrahydrofuran (THF)) based on calibration with polystyrene.

Tolylene diisocyanate

The tolylene diisocyanate used to form the aforementioned urethane prepolymer is not particularly limited. Examples of the tolylene diisocyanate include 2,4-tolylene diisocyanate, 2,6-tolylene diisocyanate, and mixtures thereof.

Isocyanate group

The urethane prepolymer contained in the composition of the present invention includes an isocyanate group.
The isocyanate group can be derived from tolylene diisocyanate.
The urethane prepolymer can include an isocyanate group at the terminus and/or at side chain of the urethane prepolymer.
The urethane prepolymer preferably includes a plurality of isocyanate groups from the perspective of the effects of the present invention being more excellent.
The content (NCO%) of the isocyanate groups in the urethane prepolymer is preferably within a range from 0.5 to 5 mass% with respect to the total amount of the urethane prepolymer from the perspective of the effects of the present invention being more excellent. The isocyanate group content (NCO%) may be a calculated value in theory. When the urethane prepolymer is a commercially available product, the content (NCO%) of isocyanate groups in the urethane prepolymer may be its catalog value.

Preparation of urethane prepolymer

The method for preparing the urethane prepolymer is not particularly limited. For example, a polyol containing at least a polyether polyol (preferably, the entire content of the polyol is a polyether polyol) and a polyisocyanate containing at least a tolylene diisocyanate (preferably, the entire content of the polyisocyanate is a tolylene diisocyanate) are used such that isocyanate groups included in the polyisocyanate are in excess of hydroxy groups included in the polyol, and the polyol and the polyisocyanate are mixed and allowed to react with each other to produce a urethane prepolymer.

Curing agent

The composition of the present invention contains a curing agent, and the curing agent contains trimethylene-bis(4-aminobenzoate) and/or 2-methylpropyl 3,5-diamino-4-chlorobenzoate.
In the present invention, the curing agent refers to a component that includes a plurality of active hydrogen-containing groups and is capable of reacting with the urethane prepolymer. The active hydrogen-containing group is not particularly limited. Examples thereof include an amino group ($-NH_2$).
Trimethylene-bis(4-aminobenzoate) mildly reacts with the urethane prepolymer, so that the composition of the present invention can achieve a sufficiently long working life. The same applies to 2-methylpropyl 3,5-diamino-4-chlorobenzoate.

Trimethylene-bis(4-aminobenzoate)

Trimethylene-bis(4-aminobenzoate) is a compound having the following structure, and includes amino groups ($-NH_2$).

In the present specification, trimethylene-bis(4-aminobenzoate) may be referred to as "specified curing agent 1".

Chemical Formula 1

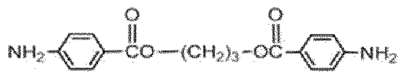

2-Methylpropyl 3,5-diamino-4-chlorobenzoate

2-Methylpropyl 3,5-diamino-4-chlorobenzoate (Benzoic acid, 3,5-diamino-4-chloro-, 2-methylpropyl ester) is a compound having the following structure, and includes amino groups ($-NH_2$).

In the present specification, 2-methylpropyl 3,5-diamino-4-chlorobenzoate may be referred to as "specified curing agent 2".

Chemical Formula 2

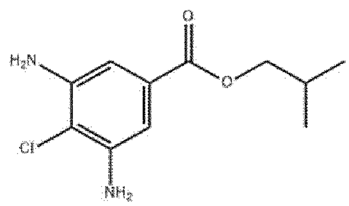

The curing agent preferably contains the specified curing agent 1 from the point of view that the resulting cured product has an excellent chromogenic property and discoloration over time can be suppressed.

Content of specified curing agents 1 and 2

In the present invention, the content of trimethylene-bis(4-aminobenzoate) and/or 2-methylpropyl 3,5-diamino-4-chlorobenzoate is within a range from 95 to 100 mol% in the total amount of the curing agent.

In the present invention, when the curing agent contains the specified curing agent 1 and the specified curing agent 2, the total content of the specified curing agent 1 and the specified curing agent 2 is within a range from 95 to 100 mol% in the total amount of the curing agent.

Other curing agents

When the content of the specified curing agent 1 and/or the specified curing agent 2 is 95 mol% or more and less than 100 mol% in the total amount of the curing agent, the curing agent may further contain a curing agent (another curing agent) other than the specified curing agent 1 and the specified curing agent 2.

The other curing agent (excluding the specified curing agent 1 and the specified curing agent 2) is not particularly limited as long as it is a compound (active hydrogen compound) including a plurality of active hydrogen-containing groups per molecule. Examples of the active hydrogen-containing group include a hydroxy group, an amino group, and an imino group.

From the point of view that the effects of the present invention are more excellent, the resulting cured product has an excellent chromogenic property, and discoloration over time can be suppressed, the curing agent preferably contains trimethylene-bis(4-aminobenzoate), and the entire content of the curing agent is preferably trimethylene-bis(4-aminobenzoate).

From the point of view that the effects of the present invention (particularly, abrasion resistance and water resistance) are more excellent, the entire content of the curing agent is preferably 2-methylpropyl 3,5-diamino-4-chlorobenzoate.

Mole ratio of isocyanate groups to amino groups

In the present invention, the mole ratio ($NCO/NH_2$) of isocyanate groups included in the urethane prepolymer to amino groups included in the curing agent is within a range from 0.90 to 2.00.
The specified curing agent 1 and the specified curing agent 2 each include amino groups ($-NH_2$) as described above.
From the point of view that the effects (particularly abrasion resistance) of the present invention are more excellent, the mole ratio is preferably within a range from 1.00 to 1.25, and more preferably within a range from 1.02 to 1.08.
In the present invention, the mole ratio ($NCO/NH_2$) of the isocyanate groups included in the urethane prepolymer to amino groups included in the curing agent can be calculated based on the following formula by using the content (NCO%) of the isocyanate groups in the urethane prepolymer set forth above and the amine value (unit: mgKOH/g) of the curing agent. When the curing agent has amine values within a numerical range, the mole ratio can be calculated by using the average value of the amine values of the curing agent. When the curing agent is a commercially available product, its catalog value can be used for the amine value of the curing agent.

$$\text{Mole ratio } (NCO/NH_2) = A/B$$

$$A = \text{amount of urethane prepolymer used (g)} \times NCO\% \times 0.01 \div 42.1$$

$$B = \text{amount of curing agent used (g)} \times \text{amine value} \times 0.001 \div 56$$

Note that when the curing agent further contains a curing agent (another curing agent) other than the specified curing agent 1 and the specified curing agent 2, the amount of the active hydrogen-containing group included in the other curing agent can be added to the amount of the amino group in the calculation of the mole ratio. In the present invention, the mole ratio after this addition should be within a range from 0.90 to 2.00, and the preferred range is the same as the range set forth above.

Adipic acid

The composition of the present invention contains adipic acid that acts as a catalyst.
Adipic acid can accelerate over time the reaction of a urethane prepolymer with trimethylene-bis(4-aminobenzoate) and/or 2-methylpropyl 3,5-diamino-4-chlorobenzoate. For this reason, the composition of the present invention is excellent in curability (particularly curability after 24 hours) at room temperature and in an open system, while enabling to achieve a sufficiently long working life.
Adipic acid ($HOOC-CH_2CH_2CH_2CH_2-COOH$) is not particularly limited.

Content of adipic acid

The content of adipic acid is preferably within a range from 0.03 to 0.20 parts by mass per 100 parts by mass of the urethane prepolymer from the point of view that the effects of the present invention are more excellent, and is more preferably within a range from 0.09 to 0.13 parts by mass per 100 parts by mass of the urethane prepolymer from the point of view that the effects (particularly, working life, curability under room temperature conditions and in an open system, abrasion resistance, and water resistance) of the present invention are more excellent, workability such as applicability is excellent by virtue of low viscosity at 5 minutes after the end of mixing, and deteriorations in physical properties before and after water resistance tests can be suppressed.

Additives

The composition of the present invention may further contain additives, as necessary, as long as the effect of the present invention is not impaired.
Examples of the additives include fillers, plasticizers, anti-aging agents, and colorants. The type and content of each of the additives can be appropriately selected.
One of the preferred aspects that may be mentioned is that the composition of the present invention does not contain MOCA.
One of the preferred aspects that may be mentioned is that the composition of the present invention contains a metal catalyst (a catalyst containing a metal) in an amount ranging from 0 to 0.5 parts by mass per 100 parts by mass of the

urethane prepolymer.

Production method for polyurethane composition

The method for producing the composition of the present invention is not particularly limited. For instance, examples that may be mentioned include a method of mixing the above-described components under a nitrogen gas atmosphere.

Room-temperature curable type

The polyurethane composition of the present invention is of a room-temperature curable type. The polyurethane composition of the present invention can be cured at room temperature and in an open system. That is, the composition of the present invention can be cured by moisture under room temperature conditions to become polyurethane. The composition of the present invention can be cured, for example, under conditions of temperature ranging from 0 to 35°C and relative humidity ranging from 20 to 65%.

Usage, etc.

The composition of the present invention is usable for a large rubber product such as a marine hose, for example, and specifically, it is usable for an outermost layer covering the rubber product, for example.
The rubber included in the rubber product is not particularly limited.
The composition of the present invention is of a room-temperature curable type as described above and hence can be used for a large product without using heating or molds, thus being useful.

Marine hose

The marine hose of the present invention is a marine hose formed by using the polyurethane composition of the present invention.
The polyurethane composition used in the marine hose of the present invention is not particularly limited as long as it is the polyurethane composition of the present invention.
There is no particular restriction on parts included in the marine hose of the present invention for which the polyurethane composition is used.
From the point of view that the polyurethane composition of the present invention is excellent in abrasion resistance, water resistance, and the like, the marine hose of the present invention preferably has an outermost layer formed by using the polyurethane composition.
The thickness of the outermost layer can be, for example, within a range from 3 to 20 mm.
When the marine hose of the present invention has the outermost layer formed by using the polyurethane composition, there is no particular restriction on the marine hose body covered by the outermost layer. Examples thereof include known ones.
As the surface layer of the marine hose body, examples that may be mentioned include a rubber layer. As the rubber layer, for example, a rubber layer containing nitrile rubber that is used as a rubber may be mentioned.
When the marine hose body has a rubber layer, the marine hose body is required to have been vulcanized.

Production of marine hose

Examples of the method for producing the marine hose of the present invention include a method in which the polyurethane composition is applied onto the surface of a vulcanized rubber marine hose body, and after the application, the polyurethane composition is cured by moisture in the atmosphere under the condition ranging from 0 to 35°C to form the outermost layer.
The method for applying the polyurethane composition to the surface of the marine hose body is not particularly limited. For example, various commonly used application methods can be used. Specific examples thereof include a method of application with a brush.

Example

An embodiment of the present invention will be described below in detail by way of examples. However, an embodiment of the present invention is not limited to such examples.

Production of polyurethane composition

The components in the following Table 1 were used in their compositions (in parts by mass) shown in the same table, and these components were mixed with a stirrer to produce each polyurethane composition. Note that, at the time of mixing, the urethane prepolymer was heated to 80°C in advance, and the curing agent was used in its heated and melted state.

Evaluation

The following evaluations were performed by using the polyurethane composition produced as described above. The results are listed in Table 1.

* Working life (Pot life)

• Evaluation methods

Each polyurethane composition produced as described above was subjected to a measurement of the viscosity of the polyurethane composition every 60 seconds using a BH type viscometer (Rotor No. 6, rotation speed of 10 rpm) under an environment of 20°C and 50%RH (relative humidity), and the period of time taken from the start of the measurement until the viscosity became 25000 mPa·s was regarded as its pot life.

• Evaluation criteria

When the pot life was within a range from 8 to 20 minutes, the working life was rated as sufficiently long, and this was indicated by "○". The figure written after "○" is the measurement result (in minutes) of the pot life.
When the pot life was more than 3 minutes and less than 8 minutes, the working life was rated as slightly short but there was no practical problem, and this was indicated by "Δ". The figure after "Δ" is the pot life (in minutes).
In the present invention, when the pot life was more than 3 minutes, the working life was rated as long (excellent in working life).
In contrast, when the pot life was 3 minutes or less, the working life was rated as very short and not practical, and this was indicated by "×". The figure after "×" is the pot life (in minutes).

* Viscosity (viscosity at 5 minutes after the end of mixing)

Each polyurethane composition produced by mixing as described above was placed under an environment of 20°C and 50%RH (relative humidity), and the viscosity (unit: mPa•s) of the polyurethane composition at 5 minutes after the end of mixing was measured with a BH type viscometer (Rotor No. 6, rotation speed of 10 rpm). Note that, when the viscosity was not able to be measured (e.g., in a case where the composition after mixing cured too fast and the material cured at an early stage immediately after mixing), this was indicated by "Unmeasurable".
The viscosity of the polyurethane composition at 5 minutes after the end of mixing is not particularly limited, but is preferably within a range from 5,000 to 25,000 mPa•s as a viscosity that allows for application work. The viscosity of the polyurethane composition at 5 minutes after the end of mixing is preferably 5,000 mPa•s or more, from the point of view that even when the polyurethane composition after mixing is applied onto a cylindrical rubber product such as a marine hose, the polyurethane composition is less likely to drip down from this rubber product and the thickness of the polyurethane composition is easy to be ensured. The viscosity of the polyurethane composition at 5 minutes after the end of mixing is preferably 25,000 mPa•s or less, from the point of view that application work is facilitated.
From the point of view as described above, the viscosity of the polyurethane composition at 5 minutes after the end of mixing is more preferably within a range from 7,000 to 10,000 mPa•s, and still more preferably within a range from 7,000 to 15,000 mPa•s.

• Curability (hardness after 24 hours at room temperature and in open system)

• Evaluation methods

Each polyurethane composition produced as described above was poured into a mold of a thickness of 10 mm (5 cm in length, 5 cm in width), and then cured for 24 hours in an environment of 20°C and 50%RH (relative humidity) with the upper part of the mold being left open.
After this curing, the hardness of the obtained cured product (cured product after 24 hours) was measured in

accordance with JIS K6253-3:2012.

• Evaluation criteria

When the hardness after 24 hours at room temperature (20°C) and in the open system, measured as described above, was 50 or more, curability was rated as excellent. The greater the hardness is than 50, the better the curability.
In contrast, when the hardness was less than 50, curability was rated as poor.

• Blister resistance

• Evaluation methods

A mold (15 cm in length, 20 cm in width) of a thickness of 5 mm was placed on a rubber sheet formed of nitrile rubber, and each polyurethane composition produced as described above was poured into the mold, and then cured in an environment of 20°C and 50%RH (relative humidity) for 7 days with the upper part of the mold being left open.
After this curing, the obtained cured product (a multilayer structure of a rubber layer and a urethane layer) was cut into a strip shape having a length of 15 cm and a width of 25 mm, and an interface between the urethane layer and the rubber layer in the cut cross section in the longitudinal direction of the strip was visually observed.

• Evaluation criteria

When there were no air bubbles or when there were air bubbles at the interface but the number of air bubbles was less than 10, and when there was no crack at the interface, the blister resistance was rated as excellent, and this was indicated by "◦".
For a situation of the interface being as described above, the adhesiveness between the urethane layer and the rubber layer is considered to be excellent.
In contrast, when there were 10 or more air bubbles at the interface or when there were cracks at the interface, the blister resistance was rated as poor.
For a situation of the interface being as described above, the adhesiveness between the urethane layer and the rubber layer is considered to be poor.

• JIS-A hardness (hardness after 7 days)

• Evaluation methods

Each polyurethane composition produced as described above was poured into a mold of a thickness of 2 mm, and then cured in an environment of 20°C and 50%RH (relative humidity) for 7 days with the upper part of the mold being left open.
After this curing, the hardness of the obtained sheet-shaped cured product (cured product after 7 days) was measured in accordance with JIS K6253-3:2012.
Note that, in the present specification, when the polyurethane composition was cured under the above-mentioned conditions (curing for 7 days with the upper part of the mold being left open under an environment of 20°C and 50%RH), the obtained cured product was regarded as a completely cured product.

• Evaluation criteria

When the cured product after 7 days obtained as described above had a hardness ranging from 83 to 93, the hardness after complete curing was rated as excellent.
In contrast, when the hardness was less than 83 or more than 93, the hardness after complete curing was rated as low.
Note that in a case where no cured product was obtained after the curing for 7 days, this case was indicated as "Unable to produce sheet". When no cured product after curing for 7 days was obtained, JIS-A hardness, and abrasion resistance and water resistance described later, were not evaluated.

• Abrasion resistance: DIN abrasion wear volume ($mm^3$)

• Evaluation methods

Three sheets of the sheet-shaped cured product (cured product after 7 days) obtained for measurement of JIS-A hardness were laid on top of each other, and a DIN abrasion test was conducted by Method B (test method of rotating a drum) in accordance with JIS K 6264-2:2005 to measure the abrasion wear volume ($mm^3$).

• Evaluation criteria

When the abrasion wear volume was 100 $mm^3$ or less, the abrasion resistance was rated as excellent. The smaller the abrasion wear volume is than 100 $mm^3$, the better the abrasion resistance.
In contrast, when the abrasion wear volume was more than 100 $mm^3$, the abrasion resistance was rated as poor.

• Water resistance: 100% modulus (MPa) after hot water at 60°C × 4 weeks

• Evaluation methods

A water resistance test was performed in which a cured product same as the sheet-shaped cured product (cured product after 7 days) obtained for JIS-A hardness measurement was immersed in hot water at 60°C for 4 weeks.
After the water resistance test, the cured product was pulled up from the hot water and a dumbbell-shaped No. 3 test piece was punched out from this cured product, then a tensile test was conducted at a tensile speed of 200 mm/min in accordance with JIS K6251:2017, and the 100% modulus (MPa) after the water resistance test was measured.

• Evaluation criteria

When 100% modulus after the water resistance test was 4.0 MPa or more, the water resistance (hot water resistance) was rated as excellent. The larger the 100% modulus is than 4.0 MPa, the better the water resistance (hot water resistance).
In contrast, when the 100% modulus was less than 4.0 MPa, the water resistance was rated as poor.

• 100% modulus (MPa) before water resistance test

A cured product (not subjected to a water resistance test) same as the sheet-shaped cured product (cured product after 7 days) obtained for JIS-A hardness measurement was used and a dumbbell-shaped No. 3 test piece was punched out from this cured product, then a tensile test was conducted at a tensile speed of 200 mm/min in accordance with JIS K6251:2017, and the 100% modulus (MPa) before the water resistance test was measured.

• Ratio of 100% modulus retention before and after water resistance test

The 100% modulus after the water resistance test and the 100% modulus before the water resistance test, which were measured as described above, were put into the following equation to calculate the ratio of the 100% modulus retention before and after the water resistance test.

Ratio (%) of 100% modulus retention before and after water resistance test = A ÷ B × 100

A: 100% modulus after water resistance test
B: 100% modulus before and after water resistance test

The larger the ratio of retention is, the more preferable it is, from the point of view that the deterioration in physical properties of the marine hose during use can be suppressed.

• Chromogenic property

• Evaluation methods

The color (transparency or not) of the sheet-shaped cured product (cured product after 7 days) obtained for JIS-A hardness measurement was visually confirmed.

• Evaluation criteria

In the present invention, when the cured product was transparent, the chromogenic property of the cured product was rated as excellent. When the cured product being transparent, the cured product might be colored as well. Examples of the case where the cured product was transparent include a case where the cured product was colorless and transparent, a case where the cured product was yellow and transparent, a case where the cured product was orange and transparent, or a case where the cured product was red and transparent. Excellent chromogenic property of the cured product is preferable because the appearance of the cured product is excellent as well.

In contrast, when the cured product was not transparent, the chromogenic property of the cured product was rated as poor. As the case where the cured product was not transparent, examples that may be mentioned include a case where the cured product was cloudy, or a case where the color of the cured product was darker than red (e.g., brown).

Table 1-1

| Table 1 | Example | | | |
|---|---|---|---|---|
| | 1 | 2 | 3 | 4 |
| Urethane prepolymer | 100 | 100 | 100 | 100 |
| Trimethylene-bis(4-aminobenzoate) | 14.9 | 14.9 | 14.9 | 17.4 |
| (Comparative) 4,4-diamino-3,3-diethyl-5,5-dimethy ldiphenylmethane | 0 | 0 | 0 | 0 |
| (Comparative) 3,3'-dichloro-4,4'-diaminophenylmethane | 0 | 0 | 0 | 0 |
| 2-Methylpropyl 3,5-diamino-4-chlorobenzoate | 0 | 0 | 0 | 0 |
| (Comparative) Dimethylthiotoluenediamine | 0 | 0 | 0 | 0 |
| Adipic acid | 0.075 | 0.11 | 0.15 | 0.11 |
| Mole ratio of isocyanate groups in urethane prepolymer to amino groups in curing agent ($NCO/NH_2$) | 1.05 | 1.05 | 1.05 | 0.90 |
| Working life (Pot life) | ○ 13 | ○ 11 | ○ 10 | ○ 9 |
| Viscosity (viscosity at 5 minutes after the end of mixing; Unit: mPa·s) | 8,500 | 9,600 | 12,000 | 13,000 |
| Curability (hardness after 24 hr at room temperature and in open system) | 59 | 70 | 74 | 52 |
| Blister resistance | ○ | ○ | ○ | ○ |
| JIS-A hardness (hardness after 7 days) | 88 | 89 | 88 | 85 |
| Abrasion resistance DIN abrasion wear volume ($mm^3$) | 45.6 | 63.7 | 69.0 | 98.0 |
| Water resistance: 100% modulus (MPa) after hot water at 60°C × 4 weeks | 4.75 | 4.59 | 4.91 | 4.05 |
| 100% Modulus (MPa) before water resistance test | 6.46 | 5.86 | 7.09 | 5.20 |
| Ratio (%) of 100% modulus retention before and after water resistance test = value after water resistance test/value before water resistance test × 100 | 73.5 | 78.3 | 69.3 | 77.9 |

(continued)

| Table 1 | Example | | | |
|---|---|---|---|---|
| | 1 | 2 | 3 | 4 |
| Chromogenic property | Light yellow transparent color | Light yellow transpare nt color | Light yellow transpare nt color | Light yellow transparent color |

Table 1-2

| Table 1 | Example | | | |
|---|---|---|---|---|
| | 2 | 5 | 6 | 7 |
| Urethane prepolymer | 100 | 100 | 100 | 100 |
| Trimethylene-bis(4-aminobenzoate) | 14.9 | 11.2 | 8.7 | 7.8 |
| (Comparative) | 0 | 0 | 0 | 0 |
| 4,4-diamino-3,3-diethyl- 5,5-dimethy ldiphenylmethane | | | | |
| (Comparative) 3,3'-dichloro-4,4'-diaminophenylmethane | 0 | 0 | 0 | 0 |
| 2-Methylpropyl 3,5-diamino-4-chlorobenzoate | 0 | 0 | 0 | 0 |
| (Comparative) Dimethylthiotoluenediamine | 0 | 0 | 0 | 0 |
| Adipic acid | 0.11 | 0.11 | 0.11 | 0.11 |
| Mole ratio of isocyanate groups in urethane prepolymer to amino groups in curing agent ($NCO/NH_2$) | 1.05 | 1.40 | 1.80 | 2.00 |
| Working life (Pot life) | ○ 11 | ○ 13 | ○ 15 | ○ 17 |
| Viscosity (viscosity at 5 minutes after the end of mixing; Unit: mPa·s) | 9,600 | 7,600 | 7,800 | 7,500 |
| Curability (hardness after 24 hr at room temperature and in open system) | 70 | 72 | 73 | 70 |
| Blister resistance | ○ | ○ | ○ | ○ |
| JIS-A hardness (hardness after 7 days) | 89 | 88 | 88 | 89 |
| Abrasion resistance DIN abrasion wear volume ($mm^3$) | 63.7 | 70.6 | 67.5 | 65.4 |
| Water resistance: 100% modulus (MPa) after hot water at 60°C × 4 weeks | 4.59 | 4.90 | 5.91 | 6.19 |
| 100% Modulus (MPa) before water resistance test | 5.86 | 6.30 | 7.60 | 7.96 |
| Ratio (%) of 100% modulus retention before and after water resistance test = value after water resistance test/value before water resistance test × 100 | 78.3 | 77.8 | 77.8 | 77.8 |
| Chromogenic property | Light yellow transparent color | Light yellow transpare nt color | Light yellow transparent color | Light yellow transpare nt color |

Table 1-3

| Table 1 | Example | | | |
|---|---|---|---|---|
| | 8 | 9 | 10 | 11 |
| Urethane prepolymer | 100 | 100 | 100 | 100 |

(continued)

| Table 1 | Example | | | |
|---|---|---|---|---|
| | 8 | 9 | 10 | 11 |
| Trimethylene-bis(4-aminobenzoate) | 0 | 7.5 | 14.9 | 14.9 |
| (Comparative) 4,4-diamino-3,3-diethyl-5,5-dimethyldiphenylmethane | 0 | 0 | 0 | 0 |
| (Comparative) 3,3'-dichloro-4,4'-diaminophenylmethane | 0 | 0 | 0 | 0 |
| 2-Methylpropyl 3,5-diamino-4-chlorobenzoate | 11.4 | 5.8 | 0 | 0 |
| (Comparative) Dimethylthiotoluenediamine | 0 | 0 | 0 | 0 |
| Adipic acid | 0.15 | 0.075 | 0.03 | 0.23 |
| Mole ratio of isocyanate groups in urethane prepolymer to amino groups in curing agent ($NCO/NH_2$) | 1.05 | 1.05 | 1.05 | 1.05 |
| Working life (Pot life) | ○ 11 | ○ 12 | ○ 15 | ○ 8 |
| Viscosity (viscosity at 5 minutes after the end of mixing; Unit: mPa·s) | 11,000 | 8,800 | 8,000 | 15,000 |
| Curability (hardness after 24 hr at room temperature and in open system) | 75 | 71 | 51 | 78 |
| Blister resistance | ○ | ○ | ○ | ○ |
| JIS-A hardness (hardness after 7 days) | 90 | 90 | 87 | 89 |
| Abrasion resistance DIN abrasion wear volume ($mm^3$) | 52.3 | 56.5 | 45.0 | 67.0 |
| Water resistance: 100% modulus (MPa) after hot water at 60°C × 4 weeks | 6.00 | 5.46 | 4.51 | 5.00 |
| 100% Modulus (MPa) before water resistance test | 7.71 | 7.40 | 6.55 | 6.40 |
| Ratio (%) of 100% modulus retention before and after water resistance test = value after water resistance test/value before water resistance test × 100 | 77.9 | 73.8 | 68.9 | 78.1 |
| Chromogenic property | Cloudy | Cloudy | Light | Light |
| | light brown | light brown | yellow transparent color | yellow transparent color |

Table 2-1

| Table 1, continued | Comparative Example | | | | |
|---|---|---|---|---|---|
| | 1 | 2 | 3 | 4 | 5 |
| Urethane prepolymer | 100 | 100 | 100 | 100 | 100 |
| Trimethylene-bis(4-aminobenzoate) | 0 | 7.5 | 0 | 0 | 0 |
| (Comparative) 4,4-diamino-3,3-diethyl-5,5-dimethy ldiphenylmethane | 0 | 6.7 | 13.4 | 0 | 0 |
| (Comparative) 3,3'-dichloro-4,4'-diaminophenylmethane | 12.7 | 0 | 0 | 0 | 0 |
| 2-Methylpropyl 3,5-diamino-4-chlorobenzoate | 0 | 0 | 0 | 5.7 | 0 |
| (Comparative) Dimethylthiotoluenediamine | | | | 5.0 | 10.0 |

(continued)

| Table 1, continued | Comparative Example | | | | |
|---|---|---|---|---|---|
| | 1 | 2 | 3 | 4 | 5 |
| Adipic acid | 0.075 | 0.075 | 0.075 | 0.075 | 0.075 |
| Mole ratio of isocyanate groups in urethane prepolymer to amino groups in curing agent ($NCO/NH_2$) | 1.05 | 1.05 | 1.05 | 1.05 | 1.05 |
| Working life (Pot life) | ○ 11 | × 2 | × 0 | × 2 | × 0 |
| Viscosity (viscosity at 5 minutes after the end of mixing; Unit: mPa·s) | 8,800 | 120000 | Unmeasurable | 70,000 | Unmeasurable |
| Curability (hardness after 24 hr at room temperature and in open system) | 69 | 72 | Unable to produce sheet | 74 | Unable to produce sheet |
| Blister resistance | ○ | ○ | | ○ | |
| JIS-A hardness (hardness after 7 days) | 88 | 71 | | 70 | |
| Abrasion resistance DIN abrasion wear volume ($mm^3$) | 67.8 | 101.7 | | 91.6 | |
| Water resistance: 100% modulus (MPa) after hot water at 60°C × 4 weeks | 5.18 | 2.95 | | 3.83 | |
| 100% Modulus (MPa) before water resistance test | 5.92 | 5.42 | | 9.43 | |
| Ratio (%) of 100% modulus retention before and after water resistance test = value after water resistance test/value before water resistance test × 100 | 87.5 | 54.4 | | 40.6 | |
| Chromogenic property | Light yellow transparent color | Light yellow transparent color | | Light yellow transparent color | |

Table 2-2

| Table 1, continued | Comparative Example | | | |
|---|---|---|---|---|
| | 6 | 7 | 8 | 9 |
| Urethane prepolymer | 100 | 100 | 100 | 100 |
| Trimethylene-bis(4-aminobenzoate) | 19.6 | 7.5 | 14.9 | 0 |
| (Comparative) 4,4-diamino-3,3-diethyl-5,5-dimethy ldiphenylmethane | 0 | 0 | 0 | 0 |
| (Comparative) 3,3'-dichloro-4,4'-diaminophenylmethane | 0 | 0 | 0 | 0 |
| 2-Methylpropyl 3,5-diamino-4-chlorobenzoate | 0 | 0 | 0 | 11.4 |
| (Comparative) Dimethylthiotoluenediamine | 0 | 0 | 0 | 0 |
| Adipic acid | 0.11 | 0.11 | 0 | 0 |

(continued)

| Table 1, continued | Comparative Example | | | |
|---|---|---|---|---|
| | 6 | 7 | 8 | 9 |
| Mole ratio of isocyanate groups in urethane prepolymer to amino groups in curing agent ($NCO/NH_2$) | 0.80 | 2.10 | 1.05 | 1.05 |
| Working life (Pot life) | Δ 5 | ○ 18 | ○ 19 | ○ 17 |
| Viscosity (viscosity at 5 minutes after the end of mixing; Unit: mPa·s) | 25,000 | 8,000 | 7,500 | 7,800 |
| Curability (hardness after 24 hr at room temperature and in open system) | 17 | 68 | 13 | 44 |
| Blister resistance | ○ | × | ○ | ○ |
| JIS-A hardness (hardness after 7 days) | 82 | 89 | 78 | 87 |
| Abrasion resistance DIN abrasion wear volume ($mm^3$) | 125.4 | 65.4 | 45.7 | 54.2 |
| Water resistance: 100% modulus (MPa) after hot water at 60°C × 4 weeks | 3.58 | 6.33 | 3.67 | 4.84 |
| 100% Modulus (MPa) before water resistance test | 4.6 | 8.13 | 4.72 | 6.22 |
| Ratio (%) of 100% modulus retention before and after water resistance test = value after water resistance test/value before water resistance test × 100 | 77.8 | 77.9 | 77.8 | 77.8 |
| Chromogenic property | Light yellow transparent color | Light yellow transparent color | Light yellow transparent color | Light yellow transparent color |

Details of the components indicated in Table 1 are as follows.

Urethane prepolymer

- Urethane prepolymer: trade name HIPRENE L-100, available from Mitsui Chemicals, Inc. Urethane prepolymer including an isocyanate group, formed of polytetramethylene ether glycol and tolylene diisocyanate (TDI). The isocyanate group content (NCO%) was 4.2 mass% in the urethane prepolymer.

Curing agent

Details of each curing agent used in Examples are shown below. Note that, as for the amine value of each curing agent, the value of the amine value used for calculating the mole ratio ($NCO/NH_2$) of the isocyanate groups in the urethane prepolymer to the amino groups in the curing agent is shown in parentheses.

- Trimethylene-bis(4-aminobenzoate): trade name CUA-4, available from KUMIAI CHEMICAL INDUSTRY CO., LTD. Molecular weight: 314.3. Amine value: from 346 to 368 mgKOH/g (357 mgKOH/g). Specified curing agent 1
- (Comparative) 4,4-Diamino-3,3-diethyl-5,5-dimethyldiphenylmethane: trade name CUREHARD MED-J, available from KUMIAI CHEMICAL INDUSTRY CO., LTD. Amine value: from 386 to 408 mgKOH/g (397 mgKOH/g)
- (Comparative) 3,3'-Dichloro-4,4'-diaminophenylmethane: MOCA. Trade name: IHARACUAMINE-MT, available from KUMIAI CHEMICAL INDUSTRY CO., LTD. Amine value: from 415 to 426 mgKOH/g (420.5 mgKOH/g)
- 2-Methylpropyl 3,5-diamino-4-chlorobenzoate: trade name ADDOLINK1604, available from Lanxess, molecular weight of 242.7. Amine value: from 452 to 479 mgKOH/g (465.5 mgKOH/g). Specified curing agent 2
- (Comparative) Dimethylthiotoluenediamine: trade name HARTCURE30, available from KUMIAI CHEMICAL INDUSTRY CO., LTD. Amine value: 531 mgKOH/g (531 mgKOH/g)

Adipic Acid

- Adipic acid: available from Asahi Kasei Corp.

In Table 1, Comparative Example 1, in which the specified curing agent 1 and the specified curing agent 2 were not contained but instead MOCA was contained, was used as a reference, and Comparative Example 2, in which the content of the specified curing agent 1 and/or the specified curing agent 2 did not meet the predetermined range, had a short working life, low hardness after complete curing (after 7 days), poor abrasion resistance, and poor water resistance. Note that, Comparative Example 1, in which the specified curing agent 1 and the specified curing agent 2 were not contained but instead MOCA was contained, is not preferable from the point of view of environmental health.

Comparative Example 3, in which the specified curing agent 1 and the specified curing agent 2 were not contained but instead 4,4-diamino-3,3-diethyl-5,5-dimethyldiphenylmethane was contained, had a short working life, and was incapable of producing a sheet.

Comparative Example 4, in which the content of the specified curing agent 1 and/or the specified curing agent 2 did not meet the predetermined range, had a short working life, low hardness after complete curing (after 7 days), and poor water resistance.

Comparative Example 5, in which the specified curing agent 1 and the specified curing agent 2 were not contained but instead dimethylthiotoluenediamine was contained, had a short working life, and was incapable of producing a sheet.

Comparative Example 6, in which the mole ratio ($NCO/NH_2$) of isocyanate groups included in the urethane prepolymer to amino groups included in the curing agent was less than 0.90, had a low hardness after complete curing (after 7 days), and had poor curability under room temperature conditions and in an open system, poor abrasion resistance, and poor water resistance.

Comparative Example 7, in which the mole ratio ($NCO/NH_2$) was more than 2.00, had poor blister resistance.

Comparative Example 8, which contained no adipic acid, had a low hardness after complete curing (after 7 days), and had poor curability under room temperature conditions and in an open system and poor water resistance.

Comparative Example 9, which contained no adipic acid, had poor curability under room temperature conditions and in an open system.

In contrast, the polyurethane composition of the present invention had a long enough working life, excellent curability under room temperature conditions and in an open system, and excellent blister resistance, and was excellent in hardness after curing (after 7 days), abrasion resistance, and water resistance (hot water resistance).

The polyurethane composition of the present invention was comparable to Comparative Example 1 or superior to Comparative Example 1 in terms of working life, curability under room temperature conditions and in an open system, blister resistance, hardness after curing (after 7 days), abrasion resistance, and water resistance (hot water resistance). Among them, in the comparison between Example 1 and Comparative Example 1, it can be seen that the polyurethane composition of the present invention has a longer working life and a better abrasion resistance than those in Comparative Example 1 containing MOCA.

The cured products obtained in Examples 1 to 7, 10, and 11 were excellent in chromogenic property. In contrast, the cured product obtained in Example 8 had a poor chromogenic property. This is assumed to be due to the use of the specified curing agent 2 in Example 8. Example 9, in which the specified curing agents 1 and 2 were used in combination, had a poor chromogenic property as with Example 8, which is assumed to be due to the use of the specified curing agent 2.

The comparison between Examples 10, Examples 1 to 3, and Example 11 in terms of the viscosity at 5 minutes after the end of mixing shows that Examples 10 and Examples 1 to 3 had lower viscosities 5 minutes after the end of mixing and lower viscosities of the polyurethane compositions than Example 11. In Example 11, the viscosity was high 5 minutes after the end of mixing and increased rapidly.

For this reason, it can be said that the content of adipic acid is preferably 0.15 parts by mass or less, and more preferably 0.13 parts by mass or less per 100 parts by mass of the urethane prepolymer, from the point of view of facilitating application work (e.g., application to large rubber products such as marine hoses) of the polyurethane composition in the present invention.

Regarding the wording of "more preferably 0.13 parts by mass or less" set forth above, in comparison of Examples 2 and 3, the working life of Examples 2 is 1 minute longer than that of Example 3, and in comparison of Examples 2 and 3 in terms of the viscosity at 5 minutes after the end of mixing, it is shown that the viscosity of Example 2 is remarkably lower than that of Example 3.

In addition, in comparison of Examples 10, 1 to 3, and 11 in terms of curability under room temperature conditions and in an open system, and abrasion resistance, it is shown that Examples 2 to 3 and 11 are remarkably superior to Examples 10 and 1 in curability under room temperature conditions and in an open system, and in abrasion resistance.

For this reason, it can be said that the content of adipic acid is preferably 0.09 parts by mass or more per 100 parts by mass of the urethane prepolymer from the point of view that curability under room temperature conditions and in an open

system and/or abrasion resistance is more excellent.

**Claims**

1. A polyurethane composition of a room-temperature curable type comprising:

   a urethane prepolymer that is formed from a polyether polyol and tolylene diisocyanate and comprises isocyanate groups;
   a curing agent that comprises trimethylene-bis(4-aminobenzoate) and/or 2-methylpropyl 3,5-diamino-4-chlorobenzoate; and
   adipic acid that acts as a catalyst,
   a mole ratio of the isocyanate groups comprised in the urethane prepolymer to amino groups comprised in the curing agent being within a range from 0.90 to 2.00, and
   a content of the trimethylene-bis(4-aminobenzoate) and/or the 2-methylpropyl 3,5-diamino-4-chlorobenzoate being within a range from 95 to 100 mol% in a total amount of the curing agent.

2. The polyurethane composition according to claim 1, wherein an entire content of the curing agent is trimethylene-bis(4-aminobenzoate).

3. The polyurethane composition according to claim 1, wherein an entire content of the curing agent is 2-methylpropyl 3,5-diamino-4-chlorobenzoate.

4. The polyurethane composition according to any one of claims 1 to 3, wherein the mole ratio is within a range from 1.00 to 1.25.

5. The polyurethane composition according to any one of claims 1 to 4, wherein the mole ratio is within a range from 1.02 to 1.08.

6. The polyurethane composition according to any one of claims 1 to 5, wherein a content of the adipic acid is within a range from 0.03 to 0.20 parts by mass per 100 parts by mass of the urethane prepolymer.

7. The polyurethane composition according to any one of claims 1 to 6, wherein a content of the adipic acid is within a range from 0.09 to 0.13 parts by mass per 100 parts by mass of the urethane prepolymer.

8. The polyurethane composition according to any one of claims 1 to 7, wherein the polyurethane composition is for a marine hose.

9. A marine hose formed by using the polyurethane composition according to any one of claims 1 to 7.

10. The marine hose according to claim 9, comprising an outermost layer formed by using the polyurethane composition.

**INTERNATIONAL SEARCH REPORT**

International application No. **PCT/JP2023/007079**

**A. CLASSIFICATION OF SUBJECT MATTER**

***C08G 18/32***(2006.01)i; ***C08G 18/10***(2006.01)i; ***C08G 18/16***(2006.01)i; ***C08G 18/48***(2006.01)i; ***C08G 18/66***(2006.01)i; ***C08G 18/76***(2006.01)i; ***F16L 1/12***(2006.01)i; ***F16L 11/133***(2006.01)i
FI: C08G18/32 037; C08G18/10; C08G18/16; C08G18/48; C08G18/66 081; C08G18/76 014; F16L1/12 Z; F16L11/133

According to International Patent Classification (IPC) or to both national classification and IPC

**B. FIELDS SEARCHED**

Minimum documentation searched (classification system followed by classification symbols)

C08G18/32; C08G18/10; C08G18/16; C08G18/48; C08G18/66; C08G18/76; F16L1/12; F16L11/133

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-25191 A (BANDO CHEMICAL IND) 02 February 2017 (2017-02-02)<br>comparative example 4 | 1, 3-4, 6<br>2, 5, 7-10 |
| A | JP 62-021686 A (NOMURA, Toru) 30 January 1987 (1987-01-30)<br>entire text | 1-10 |
| A | JP 2007-146093 A (MITSUBOSHI BELTING LTD) 14 June 2007 (2007-06-14)<br>entire text | 1-10 |
| A | JP 02-292317 A (IHARA CHEM IND CO LTD) 03 December 1990 (1990-12-03)<br>entire text | 1-10 |
| A | JP 2004-204139 A (BRIDGESTONE CORP) 22 July 2004 (2004-07-22)<br>entire text | 1-10 |
| A | WO 2008/065733 A1 (NIPPON POLYURETHANE INDUSTRY CO., LTD.) 05 June 2008 (2008-06-05)<br>entire text | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 March 2023** | **04 April 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2023/007079

C. DOCUMENTS CONSIDERED TO BE RELEVANT

| Category* | Citation of document, with indication, where appropriate, of the relevant passages | Relevant to claim No. |
|---|---|---|
| A | JP 61-011226 A (YOKOHAMA RUBBER CO LTD) 18 January 1986 (1986-01-18) entire text | 1-10 |
| A | JP 10-185048 A (BRIDGESTONE CORP) 14 July 1998 (1998-07-14) entire text | 1-10 |
| A | JP 01-176886 A (YOKOHAMA RUBBER CO LTD) 13 July 1989 (1989-07-13) entire text | 1-10 |
| A | JP 2003-342347 A (SUMITOMO RUBBER IND LTD) 03 December 2003 (2003-12-03) entire text | 1-10 |

Form PCT/ISA/210 (second sheet) (January 2015)

**INTERNATIONAL SEARCH REPORT**
**Information on patent family members**

International application No.
**PCT/JP2023/007079**

| Patent document cited in search report | Publication date (day/month/year) | Patent family member(s) | Publication date (day/month/year) |
|---|---|---|---|
| JP 2017-25191 A | 02 February 2017 | (Family: none) | |
| JP 62-021686 A | 30 January 1987 | (Family: none) | |
| JP 2007-146093 A | 14 June 2007 | (Family: none) | |
| JP 02-292317 A | 03 December 1990 | (Family: none) | |
| JP 2004-204139 A | 22 July 2004 | (Family: none) | |
| WO 2008/065733 A1 | 05 June 2008 | KR 10-2009-0082249 A<br>CN 101547952 A | |
| JP 61-011226 A | 18 January 1986 | (Family: none) | |
| JP 10-185048 A | 14 July 1998 | (Family: none) | |
| JP 01-176886 A | 13 July 1989 | (Family: none) | |
| JP 2003-342347 A | 03 December 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4861001 B